# EUROPEAN PATENT SPECIFICATION

(11) **EP 0 619 706 B1**
(45) Date of publication and mention of the grant of the patent: **24.11.1999**
(21) Application number: 92919798.6
(22) Date of filing: 04.09.1992
(51) Int. Cl.: A23K 1/00

(54) **PREPARATION OF DIETARY FATTY ACID SALT PRODUCTS**
HERSTELLUNG VON FETTSÄURESALZ-DIÄTPRODUKTEN
PREPARATION DE PRODUITS ALIMENTAIRES A BASE DE SELS D'ACIDES GRAS

(30) Priority: 04.12.1991 US 802261
(43) Date of publication of application: 19.10.1994
(73) Proprietor: CHURCH & DWIGHT COMPANY, INC., Princeton, NJ 08543-5297 (US)
(72) Inventor: VINCI, Alfredo, Dayton, NJ 08810 (US); LAJOIE, M. Stephen, Basking Ridge, NJ 07926 (US); SWEENEY, Thomas F., Morrisville, PA 19067 (US); CUMMINGS, Kenneth R., Skillman, NJ 08558 (US)
(74) Representative: Fusina, Gerolamo
(86) International application number: US9207337
(87) International publication number: WO9310669

(56) References cited:
- EP-A- 0 478 783
- US-A- 4 729 896
- US-A- 4 826 694

## Description

### CROSS-REFERENCE TO RELATED APPLICATION

The subject matter of the present patent application is related to that disclosed in patent application S.N. (Docket D11691), filed , 1991.

### BACKGROUND OF THE INVENTION

Conventional cattle feeds such as corn and alfalfa often fail to provide sufficient energy for cattle, especially lactating dairy cattle during periods of heavy milk production. Feed containing a high proportion of corn also has a tendency to depress the milk fat content of the milk produced by such cattle. Fat is a concentrated energy source, and it is known that if the proportion of fat in cattle feed is increased, lactating dairy cattle produce high milk yields without draining their reserves of body fat and without diminishing the proportion of milk fat in the milk produced.

However, it has been found that if the proportion of fat in the diet of cattle exceeds about 5% of the total feed in solids, the feed has toxic effects upon the microorganisms in the rumen of the cattle. It appears that fat reduces the growth rate or even kills certain microorganisms which digest fiber in the cow's rumen, thereby lowering fiber digestibility. This deleterious effect on the cow's rumen is particularly true of unsaturated fats. Although the decreased fiber digestion in the rumen is partially compensated by greater fiber digestion in the lower parts of the alimentary canal, the total energy derived is less than that resulting from more complete microbial digestion in the rumen.

There has been a continuing need for new dietary supplements for animal feed which can be fed to ruminant animals without interfering with the rumen microorganisms, or being rendered ineffective by the rumen microorganisms.

United States Patent Numbers 4,642,317; 4,826,694; 4,853,233; and 4,909,138 describe the incorporation of insoluble fatty acid salts in ruminant feed as a means of increasing the fat content of the feed without deleteriously affecting the ruminant digestion cycle. A feed additive such as fatty acid calcium salt functions as a rumen inert product which passes through the rumen without interfering with rumen fermentation (i.e., a rumen bypass product), and is subsequently metabolized in the abomasum or small intestine of the ruminant.

Accordingly, it is an object of the invention to provide a fatty acid salt composition which can function as a rumen bypass animal feed supplement, and permit a beneficial increase in the dietary fat content of the feed.

It is another object of this invention to provide a process for production of a fatty acid salt dietary supplement composition which contains one or more additional biologically active nutrient ingredients which have rumen bypass protection.

Other objects and advantages of the present invention shall become apparent from the accompanying description and examples.

### DESCRIPTION OF THE INVENTION

One or more objects of the present invention are accomplished by the provision of a process for the preparation of a dietary fatty acid salt product which comprises (1) reacting an admixture of ingredients comprising (a) at least one C₁₄-C₂₂ fatty acid, (b) calcium oxide in about a 0.8-1.5 equivalent weight quantity per equivalent weight of C₁₄-C₂₂ fatty acid, (c) up to 0.4 equivalent weight of basic alkali metal compound per equivalent weight of C₁₄-C₂₂ fatty acid, (d) between about 10-80 weight percent of an aqueous medium, based on the weight of fatty acid, and (e) between about 0.05-20 weight percent, based on the weight of C₁₄-C₂₂ fatty acid, of a biologically active ingredient selected from the group consisting of methionine hydroxy analog and nicotinamide; and (2) recovering the salt product after completion of an exothermic salt-forming reaction.

The C₁₄-C₂₂ fatty acid component of the salt-forming reaction medium consists of one or more saturated or unsaturated carboxylic acids such as those derived from beef and mutton tallow, lard, cottonseed oil, palm oil, and the like.

Palm fatty acid distillate is a commercial product produced by distilling the fatty acids present in natural palm oil. A distillate product typically has the following weight percent content:
- Free fatty acids: 60-90
- Water: <1
- Triglycerides: 10-40
- Unsaponifiables: <3

The iodine value is less than 54 and the melting point is about 45°C. The content of peroxides is below 10 milliequivalents of oxygen per kilogram. The fatty acids in the free fatty acids and the triglycerides consist of the following weight percent:
- Palmitic acid: 38-50
- Oleic acid: 35-40
- Linoleic acid: 5-10
- Stearic acid: 3-6
- Lauric acid: 1-3

Beef tallow acids are available commercially as a byproduct obtained by alkaline extraction of waste beef fat and subsequent acidification, and normally contain the following weight percent of fatty constituents:
- Free fatty acids: 60-90
- Triglycerides: 10-40
- Water: <1
- Unsaponifiables: <3

The iodine value is less than 50 and the melting point is 40°-45°C. The content of peroxides is less than 10 milliequivalents of oxygen per kilogram. The fatty acids in the free fatty acids and in the triglycerides have the following weight percent content:
- Palmitic acid: 22-28
- Oleic acid: 38-44
- Linoleic acid: 3-6
- Stearic acid: 18-24

Because C₁₄-C₂₂ fatty acids and glycerides are susceptible to atmospheric oxidation, it is advantageous to incorporate an oil-soluble antioxidant, and a chelating agent to bind any ferric, copper, zinc or other metal capable of catalysing atmospheric oxidation. Suitable quantities for inclusion in the fatty acid bulk are about 0.03-0.1% or higher of antioxidant as permitted by regulation, and about 0.05-0.3% of chelating agent, based on the weight of fatty acid.

Illustrative of preferred additives are butylated hydroxytoluene antioxidant and citric acid chelating agent. The chelating agent is added in an edible solvent such as propylene glycol to facilitate blending into the fatty acid.

The calcium oxide component of the process can be utilized either alone or in combination with magnesium oxide. The calcium oxide component can be calcined limestone, which contains 93-96% CaO and not more than about 7% of CaCO₃. The basic oxide preferably has a particle size which passes a 100 mesh U.S. standard screen.

The biologically active ingredient quantity employed in the process typically will vary in the range between about 0.05-20 weight percent, based on the weight of C₁₄-C₂₂ fatty acid ingredient.

As noted previously, the biologically active ingredient is selected from the group consisting of methionine hydroxy analog and nicotinamide, either individually or in combination. The ingredient can be in the form of salts such as methionine hydroxy analog metal salt or nicotinamide acid salt.

As illustrated in the Examples, the selection of biologically active ingredient is restricted because many important nutrient compounds such as aminoacids do not survive the calcium oxide hydration and fatty acid salt-formation exothermic reaction conditions which are inherent in the invention process embodiments. Nutrient compounds such as nicotinic acid and methionine are chemically transformed under the exothermic reaction conditions characteristic of the invention process.

The invention process can be conducted in a batch reactor or as a continuous operation. The fatty acid, calcium oxide, biologically active ingredient and aqueous medium can be admixed simultaneously, or the fatty acid and calcium oxide can be blended first and then combined with the other processing components.

In one processing method the fatty acid is heated to 80°-110°C or higher, and then mixed with the basic oxide. After the aqueous medium and biologically active ingredient are added to the mixture, there is a short induction period which is followed by exothermic calcium oxide hydrating and fatty acid salt-forming reactions.

The amount of aqueous medium employed is sufficient to support the calcium oxide hydrating and fatty acid salt-forming reactions, and preferably is vaporized as steam during the exothermic reaction period to yield a friable fatty acid salt product which in granule form is suitable for use as an animal feed supplement.

The biologically active ingredient can be premixed with the C₁₄-C₂₂ fatty acid, or with the aqueous medium, as determined by the fat-solubility or water-solubility of the biologically active ingredient.

A present invention fatty acid salt product is adapted to function as a rumen bypass dietary supplement in ruminant feed. An important advantage of a present invention dietary supplement composition is the rumen bypass protection which extends to all the biologically active ingredients of the composition, which normally are metabolized in the rumen.

The following Examples are further illustrative of the present invention. The components and specific ingredients are presented as being typical, and various modifications can be derived in view of the foregoing disclosure within the scope of the invention.

### EXAMPLE I

This Example illustrates the chemical stability of a variety of biologically active ingredients under calcium oxide hydration and fatty acid salt-formation exothermic reaction conditions in accordance with the present invention process.

The fatty acid component is a palm fatty acid distillate of the following composition:
- Lauric acid: 2.3%
- Palmitic acid: 49.9%
- Stearic acid: 5.4%
- Oleic acid: 35.0%
- Linoleic acid: 7.4%

Calcium oxide (100 g) and palm fatty acid distillate (700 g) are admixed, and then the mixture is blended with an aqueous medium (300 g) with stirring. Steam evolves during the exothermic calcium oxide hydration and fatty acid salt-forming reactions, and the final product is in the form of a friable solid.

The aqueous medium in separate runs contains 35 grams respectively of nicotinic acid, nicotinamide, methionine, methionine hydroxy analog, lysine or choline.

Under the reaction conditions the quantity of nicotinic acid, methionine, lysine or choline ingredient in the initial stage of the process is diminished in the final product, while the original content of methionine hydroxy analog or nicotinamide is intact in the final product.

### EXAMPLE II

This Example illustrates the continuous production of a dietary fatty acid calcium salt product in accordance with the present invention.

The process is operated continuously with equipment which is essentially the same as described and illustrated with reference to Fig. 1 of U.S. 4,826,694 by W. McAskie.

Calcium oxide from a hopper and hot palm oil distillate (96°C) for a supply line are mixed in predetermined proportions in a mixing pump. An aqueous medium is added to the reactant blend by a supply line.

The aqueous medium contains methionine hydroxy analog sodium salt. The aqueous medium is supplied to the reaction zone at a rate which provides about 30 weight percent of water, and 3 weight percent of methionine hydroxy analog sodium salt, based on the weight of palm fatty acid distillate.

The hydrated mixture formed in the process is passed through a mixing pump and the resultant semi-liquid reaction medium at about 100°C is discharged as a spread layer onto a continuously moving conveyor belt. Steam evolves from the conveyor transported reaction mass.

At the end of the conveyor belt solid lumps of reaction product fall through a sizing machine onto a second conveyor belt. In this conveying zone the salt-forming reaction and evolution of water proceed to completion. The essentially dry fatty acid calcium salt product is passed through a sifter, and collected in bags suitable for transportation and storage.

The residence time on the first conveyor is about 30 minutes, and the overall production time from reactant mixing to collection of the dry granulated product is about 2.5 hours.

The final product has a total fatty acid calcium salt content of 85 weight percent, a methionine hydroxy analog content of 2.2 weight percent, a water content of about 3-5 weight percent, and an ash content of about 15 weight percent.

The invention fatty acid calcium salt product can be incorporated as a dietary supplement in cattle feed such as hay silage or corn silage, in a calculated quantity which will provide each animal about 400-500 grams per day of fatty acid salt, and about 8-15 grams per day of methionine hydroxy analog.

The process is repeated, except that 1.5 weight percent of nicotinamide as an additional biologically active ingredient is premixed with the palm fatty acid distillate, prior to admixture with the other process ingredients.

## Claims

1. A process for the preparation of a dietary fatty acid salt product which comprises (1) reacting an admixture of ingredients comprising (a) at least one C₁₄-C₂₂ fatty acid, (b) calcium oxide in about a 0.8-1.5 equivalent basic weight quantity per equivalent weight of C₁₄-C₂₂ fatty acid, (c) up to 0.4 equivalent weight of basic alkali metal compound per equivalent weight of C₁₄-C₂₂ fatty acid, (d) between about 10-80 weight percent of an aqueous medium, based on the weight of fatty acid, and (e) between about 0.05-20 weight percent, based on the weight of C₁₄-C₂₂ fatty acid, of a biologically active ingredient selected from the group consisting of methionine hydroxy analog and nicotinamide; and (2) recovering the salt product after completion of an exothermic salt-forming reaction.

2. A process in accordance with claim 1 wherein the fatty acid and calcium oxide compounds are premixed before admixture with the other process ingredients.

3. A process in accordance with claim 1 wherein the C₁₄-C₂₂ fatty acid ingredient is a mixture comprising up to 10 percent lauric acid, up to 60 percent palmitic acid, up to 10 percent stearic acid, up to 60 percent oleic acid, and up to 10 percent linoleic acid.

4. A process in accordance with claim 1 wherein the biologically active ingredient and aqueous solution are premixed before admixture with the other process ingredients.

5. A process in accordance with claim 1 wherein the biologically active ingredient and C₁₄-C₂₂ fatty acid are premixed before admixture with the other process ingredients.

6. A process in accordance with claim 1 wherein the exothermic salt-forming reaction medium is at a temperature between about 60°-110°C.

7. A process in accordance with claim 1 wherein water evaporation occurs during the salt-forming reaction, and the salt product is recovered in the form of friable granules.

## Patentansprüche

1. Ein Verfahren zur Herstellung eines diätetischen Fettsäuresalz-Produktes, welches (1) das Umsetzen einer Mischung von Inhaltsstoffen, welche wenigstens eine C₁₄-C₂₂ Fettsäure, (b) Calciumoxid in etwa einer 0,8-1,5 Äquivalent-Basisgewichtsmenge pro Äquivalentgewicht C₁₄-C₂₂-Fettsäure, (c) bis zu 0,4 Äquivalentgewicht basische Alkalimetallverbindung, (d) zwischen etwa 10-80 Gew.% eines wäßrigen Mediums , basierend auf dem Gewicht der Fettsäure, und (e) zwischen etwa 0,05-20 Gew.%, basierend auf dem Gewicht der Fettsäure, eines biologischen Wirkstoffes, welcher aus der Gruppe ausgewählt ist, die aus einem Methioninhydroxidanalogon und Nicotinamid besteht, umfaßt und (2) das Gewinnen des Salzproduktes nach Vollendung einer exothermen Salzbildungsreaktion umfaßt.

2. Verfahren nach Anspruch 1, worin die Fettsäure- und Calciumoxidverbindungen vor dem Vermischen mit den weiteren Verfahrensinhaltsstoffen vorvermischt werden.

3. Verfahren nach Anspruch 1, worin die C₁₄-C₂₂-Fettsäure eine Mischung ist, welche bis zu 10% Laurinsäure, bis zu 60% Palmitinsäure, bis zu 10% Stearinsäure, bis zu 60% Oleinsäure und bis zu 10% Linolsäure umfaßt.

4. Verfahren nach Anspruch 1, worin der biologische Wirkstoff und die wäßrige Lösung vor dem Vermischen mit den weiteren Verfahrensinhaltsstoffen vorvermischt werden.

5. Verfahren nach Anspruch 1, worin der biologische Wirkstoff und die C₁₄-C₂₂-Fettsäure vor dem Vermischen mit den weiteren Verfahrensinhaltsstoffen vorvermischt werden.

6. Verfahren nach Anspruch 1, worin sich das Medium der exothermen Salzbildungsreaktion auf einer Temperatur zwischen etwa 60°C-110°C befindet.

7. Verfahren nach Anspruch 1, worin während der Salzbildungsreaktion ein Verdampfen von Wasser auftritt und das Produkt in Form von brüchigem Granulat gewonnen wird.

## Revendications

1. Procédé pour la préparation d'un produit de régime alimentaire ou diététique à base de sel d'acide gras qui comprend les opérations consistant à (1) mettre en réaction un mélange d'ingrédients comprenant au moins (a)un acide gras C14-C22, (b) un oxyde de calcium dans une quantité en poids basique équivalent d'environ 0,8-1,5 par poids équivalent d'acide gras C14-C22, (c) jusqu'à 0,4 poids équivalent de composé basique des métaux alcalins par poids équivalent d'acide gras C14-C22, (d) entre environ 10-80 pour cent en poids d'un milieu aqueux, rapporté au poids de l' acide gras, et (a) entre environ 0,055-20 pour cent en poids, rapporté au poids de l'acide gras C14-C22, d'un ingrédient biologiquement actif choisi dans le groupe constitué d'un analogue méthionine hydroxy et de nicotinamide; et (2) récupérer le produit de sel après l'achèvement de la réaction de formation de sel exothermique.

2. Procédé selon la revendication 1, dans lequel les composés d'acide gras et d'oxyde de calcium sont prémélangés avant l'addition et le mélange avec les autres ingrédients du procédé.

3. Procédé selon la revendication 1 dans lequel l'ingrédient d'acide gras C14-C22 est un mélange comprenant jusqu'à 10 pour cent d'acide laurique, jusqu'à 60 pour cent d'acide palmitique, jusqu'à 10 pour cent d'acide stéarique, jusqu'à 60 pour cent d'acide oléique et jusqu'à 10 pour cent d'acide linoléique.

4. Procédé selon la revendication 1, dans lequel l'ingrédient biologiquement actif et la solution aqueuse sont prémélangés avant l'addition et le mélange avec les autres ingrédients du procédé.

5. Procédé selon la revendication 1, dans lequel l'ingrédient biologiquement actif et l'acide gras C14-C22 sont prémélangés avant l'addition et le mélange avec d'autres ingrédients du procédé.

6. Procédé selon la revendication 1, dans lequel le milieu de réaction formant le sel exothermique se situe à une température entre environ 60 - 110 °C.

7. Procédé selon la revendication 1, dans lequel l'évaporation de l'eau se produit pendant la réaction de formation de sel et le produit de sel est récupéré sous forme de granules friables.
